Europäisches Patentamt

European Patent Office

Office européen des brevets

(11) Numéro de publication: **0 309 435 B1**

## FASCICULE DE BREVET EUROPEEN

(45) Date de publication de fascicule du brevet: **09.12.92** (51) Int. Cl.5: **A47J 37/12**

(21) Numéro de dépôt: **88870153.9**

(22) Date de dépôt: **23.09.88**

(54) **Appareil de cuisson électrique.**

(30) Priorité: **24.09.87 BE 8701082**

(43) Date de publication de la demande:
**29.03.89 Bulletin 89/13**

(45) Mention de la délivrance du brevet:
**09.12.92 Bulletin 92/50**

(84) Etats contractants désignés:
**BE CH DE ES FR GB IT LI NL**

(56) Documents cités:
EP-A- 0 149 856     US-A- 1 529 342
US-A- 2 165 204     US-A- 2 253 752
US-A- 2 578 971     US-A- 2 724 322
US-A- 2 878 748     US-A- 2 915 000
US-A- 3 430 553

(73) Titulaire: **NOVA ELECTRO INTERNATIONAL N.V.**
**Overhaamlaan 44**
**B-3700 Tongeren(BE)**

(72) Inventeur: **Boyen, Lodewijk J.**
**Drève de Waroux, 1**
**B-4430 Alleur(BE)**

(74) Mandataire: **Vanderperre, Robert et al**
**Bureau Vander Haeghen S.A. Rue Colonel Bourg 108 A**
**B-1040 Bruxelles(BE)**

Rank Xerox (UK) Business Services

# Description

La présente invention est relative à un appareil de cuisson électrique comprenant une cuve, un panier ajouré pouvant être levé ou abaissé dans cette cuve, une poignée reliée au panier par un système de connexion comportant, d'une part, un coulisseau à mouvement de va-et-vient et, d'autre part, un dispositif par lequel le panier est suspendu à une extrémité du coulisseau, ainsi qu'un mécanisme à moteur provoquant un déplacement du coulisseau de manière à lever ou abaisser le panier dans la cuve.

On connaît, par le brevet belge 901.535, un appareil du type décrit dans le paragraphe précédent.

Ce type d'appareil permet de lever ou abaisser le panier à l'intérieur de la cuve munie ou non d'un couvercle à l'aide d'un moteur électrique ou de façon manuelle. Cet appareil peut également être muni d'une minuterie destinée à programmer l'abaissement ou l'élévation du panier dans la cuve. Cet abaissement ou cette élévation du panier est réalisé grâce à un levier actionné par le moteur et agissant sur le coulisseau.

On connaît également un grille-pain par le brevet US 2.878.748 comportant un mécanisme de connexion d'un moteur avec une minuterie. Ce mécanisme comporte un grand nombre de roues, de cames et de ressorts.

L'homme du métier ne peut combiner les connaissances de ce brevet avec celles du brevet belge 901.535 parce qu'un grille-pain nécessite l'élévation de faibles masses, tandis qu'un appareil de cuisson du type décrit dans le premier paragraphe du présent mémoire nécessite l'élévation d'un panier pouvant contenir jusqu'à un kilo d'aliments, voire plus.

On remarquera encore que c'est le placement d'une tranche de pain sur un support qui permet de débloquer une oreille sur laquelle peut agir une came et que, lors du placement de ladite tranche, ladite came n'agit pas sur l'oreille et donc sur ledit support.

Il est clair qu'un tel mécanisme n'est pas apte à soulever des charges importantes puisque la force de maintien du support dans une position levée est limitée par la force de rappel d'un ressort.

L'homme du métier qui cherchait à soulever un panier dans un appareil de cuisson tel qu'une friteuse s'est toujours tourné vers l'utilisation de ressorts, de crémaillères ou de vis sans fin. L'homme du métier avait un préjugé selon lequel il ne serait pas possible de soulever un panier contenant une charge pouvant atteindre un kilo et de le maintenir dans cette position au moyen d'une came située sur un disque.

La présente invention a pour objet un mécanisme simple permettant non seulement de lever ou abaisser le panier à l'intérieur de la cuve, mais également de réaliser la programmation de la cuisson d'aliments et le déplacement du panier et de maintenir ledit panier dans sa position levée, ce mécanisme ne comportant qu'un seul moteur dans le but de réduire le prix de revient de l'appareil de cuisson.

L'appareil suivant l'invention, du type décrit dans le premier paragraphe du présent mémoire, est caractérisé en ce qu'il comprend une minuterie constituée d'un disque entraîné en rotation par le moteur et une tige coudée pouvant pivoter par rapport à la cuve. Cette tige présente au moins deux branches sensiblement perpendiculaires à l'axe de pivotement de la tige, une première desdites branches étant dirigée vers le disque tandis que la seconde branche est dirigée vers le coulisseau. Dans l'appareil suivant l'invention, lorsque la première branche entre en contact avec une came que porte le disque, cette branche provoque le pivotement de la tige et de la deuxième branche de manière à déplacer le coulisseau pour lever le panier après un intervalle de temps déterminé par la minuterie. L'appareil suivant l'invention comprend en outre un système arrêtant la rotation dudit disque lorsque le panier est dans sa position levée.

Selon une particularité de l'appareil suivant l'invention, le système arrêtant la rotation dudit disque est un interrupteur monté dans un circuit électrique commandant le moteur.

Selon une autre particularité, le système arrêtant la rotation du disque comporte un premier élément mis en rotation par le moteur et un second élément destiné à mettre en rotation le disque, lesdits éléments étant associés l'un avec l'autre pour mettre en rotation ledit disque, cette association étant commandée par une pièce intermédiaire.

Dans une forme de réalisation de l'appareil suivant l'invention, dans laquelle la poignée est articulée au coulisseau, de manière à pouvoir pivoter depuis une première position dans laquelle elle s'étend le long de la cuve jusqu'à une seconde position où elle est sensiblement perpendiculaire à la cuve, le disque précité porte une autre came agissant sur un organe éloignant la poignée de ladite première position.

Le système de cette forme de réalisation est avantageusement un interrupteur arrêtant le moteur.

Dans cette forme de réalisation, la poignée agit dans sa première position sur l'interrupteur, de manière à maintenir le circuit fermé.

Selon une autre particularité de l'appareil suivant l'invention, le moteur précité entraîne le disque par l'intermédiaire d'un engrenage, cet engrenage comportant, de préférence, une vis sans fin entraînée en rotation par le moteur et engrenant avec une couronne dentée solidaire du disque précité.

Dans une autre forme de réalisation de l'appareil suivant l'invention, l'organe éloignant la poignée de ladite première position est constitué d'une tige coudée pouvant pivoter par rapport à la cuve, cette tige coudée présentant deux branches sensiblement perpendiculaires à l'axe de pivotement de la tige, la première branche étant dirigée vers le disque, tandis que la seconde branche est dirigée vers la cuve et porte à son extrémité, au voisinage de la cuve, un bras sensiblement parallèle à l'axe de pivotement, de sorte que, lorsque la première branche entre en contact avec l'autre came du disque, elle provoque le pivotement de la tige, de la deuxième branche et du bras, de manière à éloigner la poignée de ladite première position.

Dans une forme de réalisation particulière de l'appareil suivant l'invention, les cames sont disposées sur le disque de sorte que, lorsqu'une came a agi sur l'organe provoquant le déplacement du coulisseau de manière à lever le panier, l'autre came agit sur l'organe éloignant la poignée de ladite première position de manière à commander l'interrupteur pour arrêter le moteur, ces cames ayant, de préférence, une rampe s'élevant progressivement du disque jusqu'à un plateau et ensuite une rampe s'abaissant progressivement vers le disque.

D'autres particularités et détails de l'invention ressortiront de la description détaillée de formes de réalisation données à titre d'exemple, dans lesquelles il est fait référence aux dessins ci-annexés.

Dans ces dessins :
- la figure 1 est une vue partielle en perspective d'un appareil de cuisson électrique suivant l'invention ;
- les figures 2 et 3 sont des vues en coupe d'un mécanisme permettant un déplacement du coulisseau d'un appareil suivant l'invention ;
- les figures 4 à 6 sont des vues en élévation et en plan de la minuterie d'un appareil suivant l'invention ;
- les figures 7 à 9 montrent, en élévation après coupe partielle, la poignée et les organes agissant sur elle dans diverses positions ;
- la figure 10 est une vue partielle en perspective d'un appareil de cuisson suivant l'invention muni d'une sonnette ;
- les figures 11 et 12 sont des vues en coupe similaires à celles des figures 3 et 2 d'une deuxième forme de réalisation d'un mécanisme, et
- les figures 13 à 16 sont des vues en coupe d'une troisième forme de réalisation d'un mécanisme permettant le déplacement du coulisseau d'un appareil suivant l'invention.

Dans ces différentes figures, les mêmes notations de référence désignent des éléments identiques.

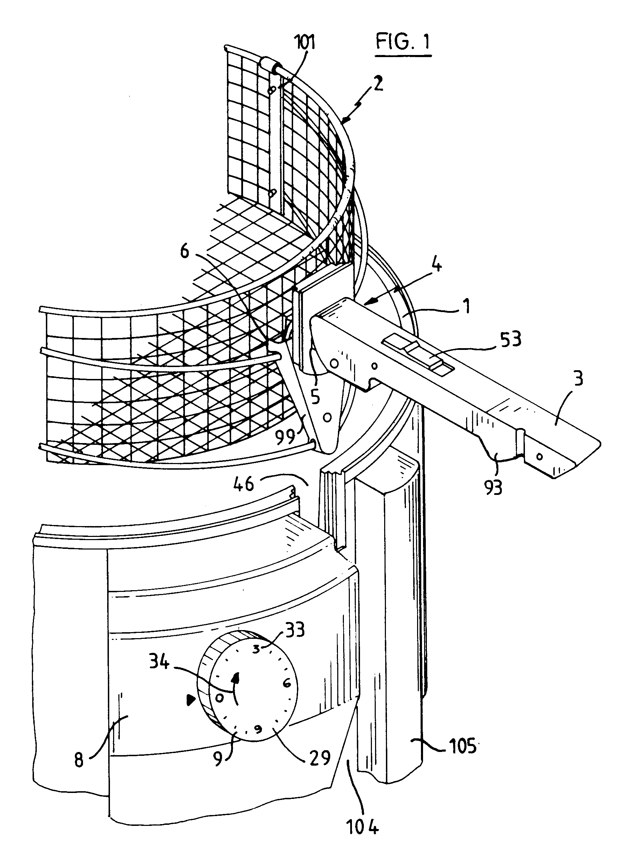

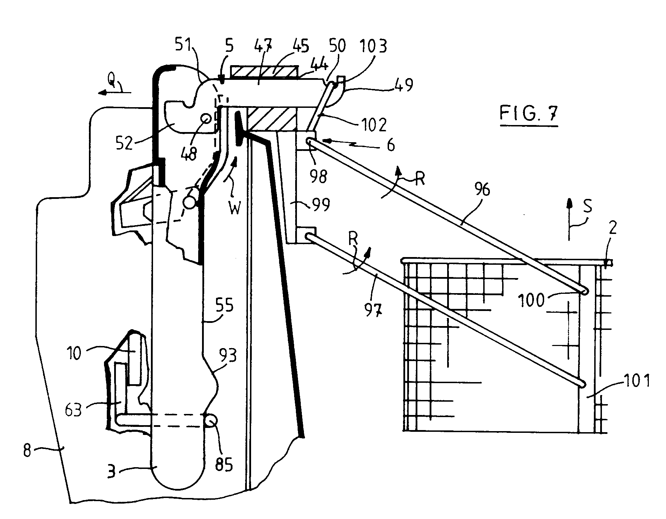

La figure 1 représente schématiquement un appareil de cuisson comprenant une cuve 1 destinée à contenir, par exemple, une matière grasse pour friture et un panier ajouré 2 destiné à contenir les aliments à cuire pouvant être levé ou abaissé dans la cuve 1. Le panier 2 est relié à une poignée 3 par un système de connexion 4 comportant, d'une part, un coulisseau 5 à mouvement de va-et-vient et, d'autre part, un dispositif 6 par lequel le panier 2 est suspendu à une extrémité du coulisseau 5 (voir également figures 7 à 9).

Un mécanisme à moteur désigné dans son ensemble par la notation de référence 7 est logé dans un boîtier 8 fixé sur la surface extérieure de l'appareil.

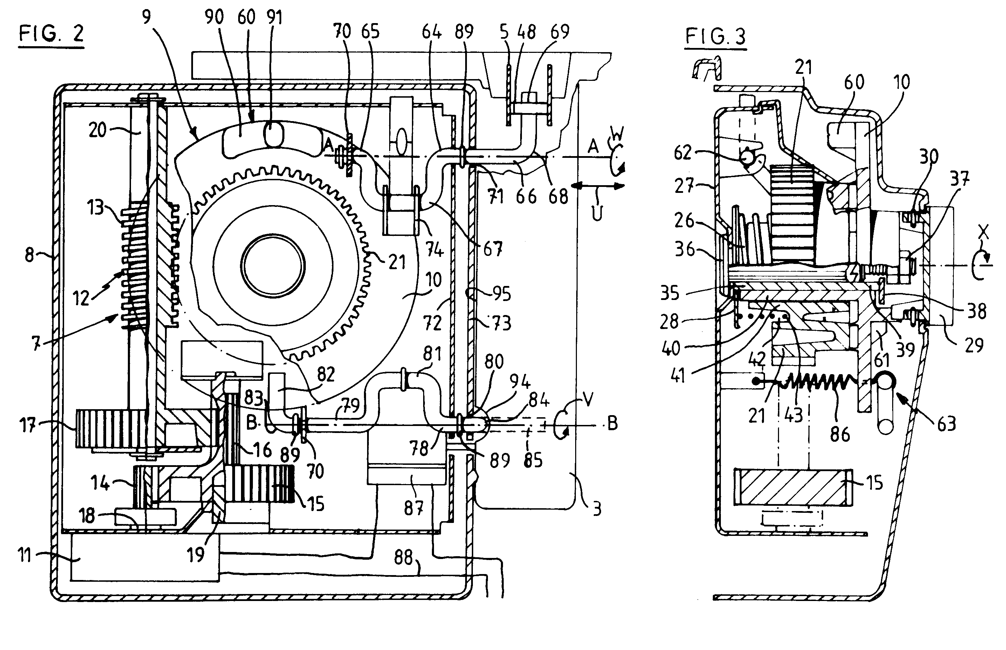

Ce mécanisme 7 comprend une minuterie 9 (voir figure 2) constituée d'un disque 10 entraîné en rotation par un moteur électrique 11 grâce à un engrenage 12. Cet engrenage 12 comporte une vis sans fin 13 entraînée en rotation par le moteur 11 par l'intermédiaire de roues dentées 14,15,16,17. Le moteur 11 entraîne en rotation un arbre 18 sur lequel est montée la roue dentée 14. Cette roue dentée 14 engrène avec la roue dentée 15 qui est calée sur un arbre 19 parallèle à l'arbre 18 de rotation du moteur 11. Cet arbre 19 porte également la roue dentée 16 dont les dents engrènent avec celles de la roue 17 calée sur un arbre 20, de manière à mettre en rotation la vis sans fin 13 qui est montée sur ce même arbre 20.

Cet ensemble de roues dentées 14,15,16,17 permet de réduire la vitesse de rotation du moteur électrique 11.

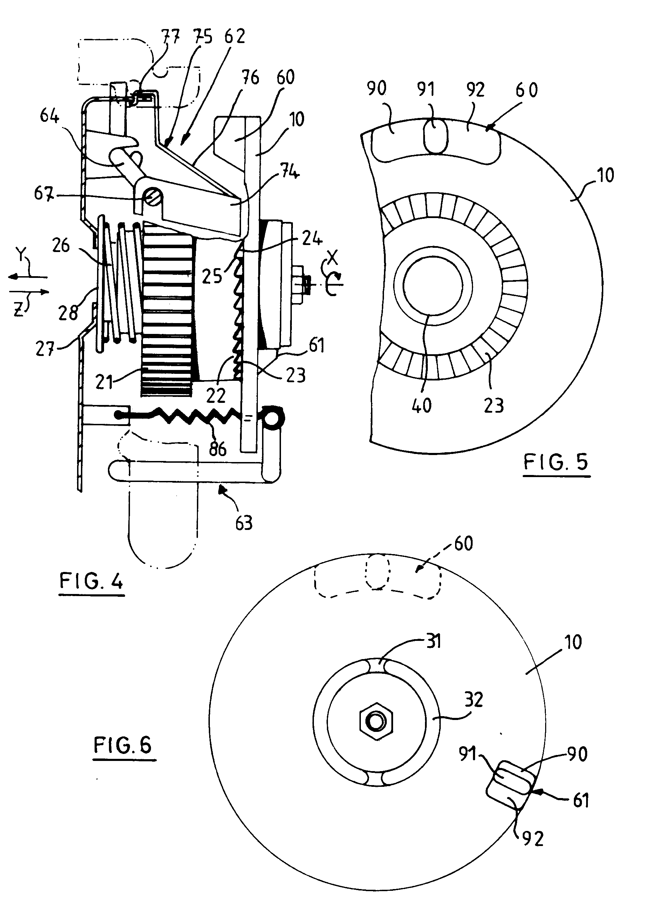

La vis sans fin 13 engrène avec une couronne dentée 21 solidaire du disque 10 (voir figures 3 et 4). Cette couronne dentée 21 est coaxiale au disque 10 et porte une série circulaire de saillies 22 engagées de façon amovible dans des évidements 23 ménagés dans le disque 10, de manière à solidariser la couronne 21 du disque 10. La forme des saillies 22 qui épouse celle des évidements 23 présente une face 24 inclinée par rapport au disque 10 et une face 25 sensiblement perpendiculaire au disque 10.

Les saillies 22 de la couronne 21 sont appliquées dans les évidements 23 du disque 10 grâce à l'action d'un ressort 26 prenant appui, par l'intermédiaire d'une rondelle 28, sur une face 27 du boîtier 8 adjacente à la cuve 1.

La minuterie 9 comporte un bouton 29 de réglage (voir figures 1 et 3) permettant de faire tourner le disque 10 par rapport à la couronne 21. Ce bouton 29 peut être solidarisé du disque par l'emboîtement de deux appendices 30 du bouton 29 dans des cavités 31 que présente un anneau 32 solidaire du disque 10 (voir figures 3 et 6). Ce bouton 29 porte avantageusement sur sa face dirigée vers l'extérieur du boîtier 8 des indications 33 du temps de cuisson, ainsi qu'une flèche 34 indiquant le sens dans lequel l'utilisateur doit faire tourner ledit bouton 29 (voir figure 1).

Lorsque le bouton 29 subit une rotation dans le sens de la flèche X, la face inclinée 24 des saillies 22 de la couronne 21 glisse sur la face 24 des évidements 23, de sorte que la couronne 21 se déplace à l'encontre du ressort 26 dans la direction de la flèche Y (voir figure 4). Lorsque le sommet de la face inclinée 24 des saillies 22 a dépassé le sommet de celle des évidements 23, la couronne 21 est à nouveau appliquée (sens de la flèche Z) sur le disque 10 grâce au ressort 26, de manière à solidariser le disque 10 de la couronne 21.

Ce bouton 29 permet ainsi de régler pas à pas la durée ou temps de cuisson.

Le disque 10 est monté sur un cylindre creux 35 fixé à la paroi 27 du boîtier 8 au moyen d'une vis 36 et d'écrous 37 prenant respectivement appui sur la paroi 27 et sur une rondelle 38 placée à une extrémité 39 du cylindre 35 (voir figure 3).

Le disque 10 porte avantageusement une buselure 40 qui épouse la forme du cylindre 35. Sur cette buselure 40 est montée, de façon mobile, la couronne 21. Celle-ci présente un bourrelet annulaire 41 épousant la forme extérieure cylindrique de la buselure 40 du disque 10 et une gorge circulaire 42 dans laquelle une extrémité 43 du ressort 26 est logée.

Le coulisseau 5 (voir figures 7 à 9) peut se déplacer dans un passage 44 ménagé dans une pièce 45 s'emboîtant dans une encoche 46 (voir figure 1) prévue dans le bord supérieur de la cuve 1. Il est évident qu'au lieu d'une telle encoche 46, on peut prévoir une rainure s'étendant dans le bord du couvercle ou à la fois dans le bord de la cuve et du couvercle. Ce coulisseau 5 est constitué de deux plaquettes 47 solidarisées entre elles au moyen de barrettes 48. Une de ces barrettes 48 sert également de pivot de la poignée 3. Les plaquettes 47 présentent, au voisinage de leur extrémité 49 adjacente au panier 2, une encoche 50 ouverte vers la partie supérieure des plaquettes et, au voisinage de leur extrémité 51 adjacente à la poignée 3, une partie 52 décalée par rapport à la partie inférieure des plaquettes.

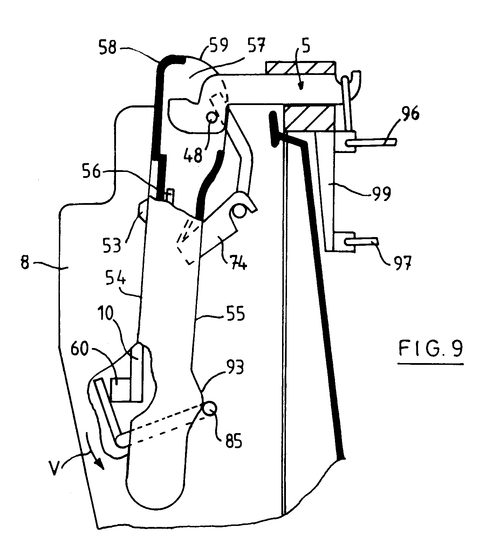

La poignée 3 est munie d'un poussoir 53 glissant sur la face 54 de la poignée opposée à celle (55) adjacente au panier 2 (voir figures 1 et 9). Ce poussoir 53 est solidaire d'une butée 56 qui peut faire saillie dans un creux 57 ménagé dans la poignée 3. Lorsque la poignée 3 est amenée dans la position de préhension du panier 2 (voir figure 1), c'est-à-dire lorsque la poignée 3 est sensiblement perpendiculaire à la pièce 45, la butée 56 introduite dans le creux 57 permet d'empêcher tout mouvement de la poignée 3 autour de son pivot 48.

La poignée 3 présente à son extrémité 58 adjacente au creux 57 un bossage 59 qui, lorsque la poignée 3 est sensiblement perpendiculaire à la pièce 45, prend appui par son extrémité 58 sur ladite pièce 45 (voir figure 1).

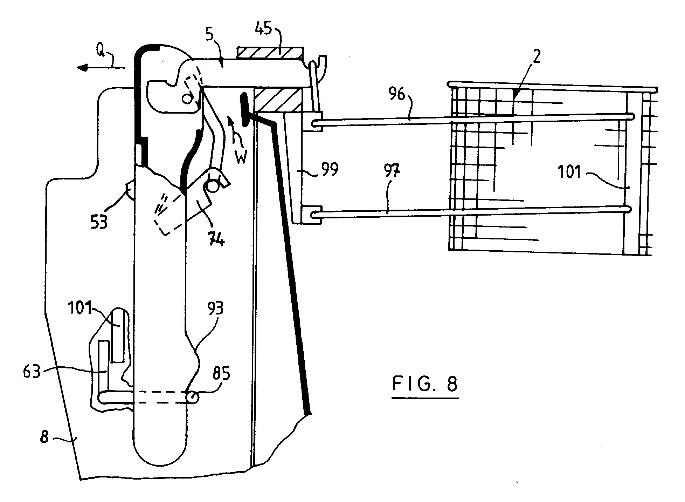

Le disque 10 porte deux cames 60,61 montées sur les faces opposées du disque 10 et au voisinage de sa périphérie (voir figures 2 à 6). Ces cames agissent respectivement sur des organes 62,63. L'organe 62 est destiné à provoquer le déplacement du coulisseau 5, de manière à lever le panier 2 après un intervalle de temps déterminé. Quant à l'organe 63, il est destiné à éloigner la poignée 3 d'une position dans laquelle elle s'étend le long de la cuve 1 (voir figures 8 et 9).

L'organe 62 provoquant le déplacement du coulisseau 5 comprend une tige coudée 64 pouvant pivoter (flèche W, axe A-A) par rapport à la cuve 1 (voir figure 2). Cette tige coudée 64 est constituée d'une barre formée de deux tronçons 65,66 coaxiaux à son axe de pivotement A-A, cette barre présentant, entre ces deux tronçons coaxiaux 65,66, un tronçon 67 éloigné de l'axe de pivotement A-A et, à une extrémité 68 du tronçon 66, une branche 69 sensiblement perpendiculaire à l'axe A-A. Le tronçon éloigné 67 est dirigé vers le disque 10, tandis que la branche 69 est dirigée vers le coulisseau 5. La tige coudée 64 est fixée à la paroi du boîtier 8 au moyen d'une oreille perforée 70 et de trous 71 percés dans les parois interne 72 et externe 73 du boîtier 8.

Une biellette 74 est articulée, d'une part, au tronçon 67 et, d'autre part, à un moyen de rappel 75 de cette biellette 74 dans sa position initiale, c'est-à-dire dans une position dans laquelle elle n'est pas en contact avec la came 60. Le moyen de rappel 75 est constitué par une lame flexible pliée 76, dont une extrémité 77 est solidaire du boîtier 8.

Lorsque la came 60 entre en contact avec la biellette 74, cette came 60 provoque le déplacement de ladite biellette 74 et le pivotement de la branche 69 de l'organe 62. Cette branche 69 s'appuie, lors de son pivotement, sur une butée constituée par le pivot 48 de la poignée 3, de manière à déplacer ce coulisseau 5 (figures 7 et 8, flèche Q) pour lever le panier 2.

L'organe 63 destiné à éloigner la poignée 3 de la position dans laquelle elle s'étend le long de la cuve 1 comprend une tige coudée 78 pouvant pivoter (flèche V, axe B-B) par rapport à la cuve 1. Cette tige 78 est constituée d'une barre formée de deux tronçons coaxiaux 79,80, cette barre présentant un tronçon 81 éloigné de l'axe de pivotement (B-B) entre les deux tronçons coaxiaux 79,80, une branche 82 sensiblement perpendiculaire à l'axe de pivotement (B-B) à une extrémité 83 d'un (79) des tronçons coaxiaux 79,80 et une branche 84 munie d'un bras 85 à l'extrémité de l'autre tronçon coaxial 80. La branche 82 est dirigée vers le disque 10, tandis que la branche 84 munie du bras 85 est dirigée vers la cuve 1.

L'organe 63 est fixé à la paroi du boîtier 8 au moyen d'une oreille perforée 70 et de trous 71 percés dans les parois interne 72 et externe 73 du boîtier 8.

Le tronçon 81 éloigné de l'axe de pivotement B-B est soumis à l'action d'un moyen de rappel constitué, par exemple, par un ressort 86 solidaire d'une paroi du boîtier 8. Ce ressort 86 permet de ramener l'organe 63 dans sa position initiale, c'est-à-dire dans une position dans laquelle la branche 84 ou le bras 85 ne sont respectivement pas en contact avec la came 61 et la poignée 3.

Lorsque la branche 82 entre en contact avec la came 61 du disque 10, elle provoque le pivotement de la tige 78, de la branche 84 et du bras 85, de sorte que ce bras 85 s'appuie sur la face 55 de la poignée 3, de manière à éloigner celle-ci de la position dans laquelle elle s'étend le long de la cuve 1.

Ce déplacement de la poignée 3 permet d'ouvrir un interrupteur 87 logé dans le boîtier 8 et monté dans un circuit électrique 88 destiné à permettre l'amenée de courant au moteur 11. L'ouverture du circuit 88 permet l'arrêt du moteur 11.

Les organes 62,63 présentent avantageusement sur leurs tronçons coaxiaux 65,66 ; 79,80 des collerettes 89 destinées à limiter les mouvements des organes 62,63 dans le sens des flèches U.

Les cames 60 et 61 sont avantageusement montées sur les faces opposées du disque 10, au voisinage de sa périphérie. Elles présentent une première rampe 90 s'élevant progressivement à partir du disque 10 jusqu'à un plateau 91 et ensuite une deuxième rampe 92 s'abaissant progressivement vers le disque 10. De plus, les cames 60,61 sont disposées sur le disque 10 de telle sorte que, lorsque la came 60 a agi sur l'organe 62 provoquant le déplacement du coulisseau 5 de manière à lever le panier 2, la deuxième came 61 agit sur l'organe 63 pour déplacer la poignée 3. Ce déplacement de la poignée 3 provoque l'ouverture de l'interrupteur 87 et ainsi l'arrêt du moteur 11. Ce déplacement est facilité par la présence, sur la face 55 de la poignée 3, d'une protubérance 93 sur laquelle prend appui le bras 85 pour éloigner la poignée 3 de la position dans laquelle elle s'étend le long de la cuve 1.

La poignée 3 présente également, sur sa face 95 adjacente au boîtier 8, une rainure ou gorge 94 dans laquelle peut venir se loger la branche 84 de l'organe 63 (voir figure 1).

Les figures 7 à 9 montrent différentes positions que la poignée 3 et le panier 2 peuvent prendre lorsque le panier 2 se trouve dans la cuve 1.

Le panier 2 est suspendu au coulisseau 5 par le dispositif 6. Ce dispositif est constitué de deux bras de levier 96,97 articulés à une extrémité 98 à un prolongement 99 de la pièce 45 et à l'autre extrémité 100 à une plaque 101 solidaire du panier 2. Le bras de levier supérieur 96 présente, à son extrémité 98 articulée au prolongement 99, une partie 102 sensiblement perpendiculaire au bras 96, cette partie 102 portant une tige 103 engagée dans les encoches 50 des plaquettes 47 formant le coulisseau 5.

Lorsque la came 60 entre en contact avec la biellette 74, cette came 60 provoque le pivotement de l'organe 62 dans le sens de la flèche W (voir figures 7 et 8), de manière à déplacer le coulisseau 5 dans le sens de la flèche Q. Le déplacement du coulisseau 5 permet à la tige 103 d'être déplacée dans le sens de la flèche Q, de sorte que les bras de levier 96,97 pivotent autour de leur articulation adjacente à leur extrémité 98 (flèche R), de manière à lever le panier 2 dans le sens de la flèche S.

Lorsque la came 61 entre en contact avec l'organe 63, cet organe pivote dans le sens de la flèche V, de sorte que le bras 85 prend appui sur la protubérance 93 de la poignée 3, de manière à éloigner celle-ci de la position dans laquelle elle s'étend le long de la cuve 1 (figures 8 et 9).

La poignée 3 de l'appareil suivant l'invention est avantageusement encastrée dans un logement 104 ménagé entre le boîtier 8 et une partie saillante 105 de l'appareil (voir figure 1). Lorsque cette poignée 3 est engagée dans ce logement 104, elle actionne l'interrupteur 87, de manière à fermer le circuit 88 pour permettre la mise en marche du moteur 11. Toutefois, l'emboîtement de la poignée 3 dans le logement 104 ne peut être effectué que lorsque le bras 85 ne prend plus appui sur la protubérance 93 de la poignée 3, c'est-à-dire lorsque la came 61 n'est plus en contact avec l'organe 63 ou encore lorsque le temps de cuisson a été réglé par la rotation du bouton 29 de la minuterie 9.

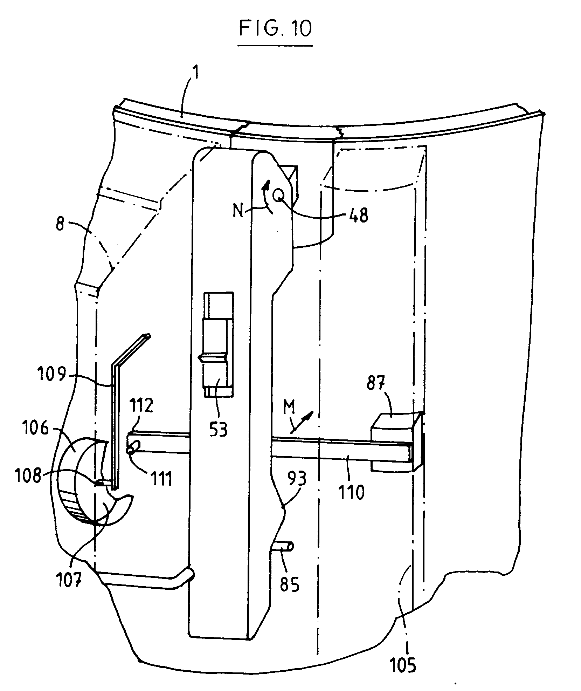

La figure 10 est une vue partielle en perspective d'un appareil de cuisson suivant l'invention muni d'une sonnette 105. Cette sonnette 105 a la forme d'une cloche 106 présentant un fond 107 solidaire d'une tige 108 d'un bras 109 fixé à l'appareil de cuisson ou au boîtier 8. Dans cette forme de réalisation, l'interrupteur 87 comprend un organe de commande constitué d'une lame de ressort 110 dont une extrémité est solidaire dudit interrupteur 87. Cette lame 110 peut se courber dans le sens de la flèche M sous l'action de la poignée 3, lorsque cette dernière s'étend sensiblement le long de la cuve 1.

La lame 110 présente un appendice formant un marteau 111 situé à l'extrémité 112 de la lame opposée à l'extrémité solidaire de l'interrupteur 87.

Lorsque le bras 85 prend appui sur la protubérance 93 de la poignée 3, celle-ci pivote autour de l'arbre 48 dans le sens de la flèche N.

Ainsi, la poignée 3 ne prend plus appui sur ladite lame 110, de sorte que le marteau 111 de cette lame 110 frappe la cloche 105, de manière à avertir l'utilisateur par un signal sonore que le panier 2 est en position relevée.

Il est évident que l'appareil de cuisson électrique suivant l'invention peut être muni de divers témoins, tels que des témoins lumineux indiquant la mise sous tension de l'appareil et que le mécanisme 7 peut comporter plusieurs disques 10 pour permettre la cuisson d'aliments en plusieurs étapes.

L'appareil suivant l'invention permet à l'utilisateur de constater si le panier 2 est extrait du corps de cuisson contenu dans la cuve 1, grâce à l'éloignement de la poignée 3 de sa position dans laquelle elle s'étend le long de la cuve 1, c'est-à-dire grâce au déboîtement de la poignée 3 de son logement 104.

L'appareil suivant l'invention présente une double sécurité à la cuisson puisque l'abaissement du panier 2 ne peut avoir lieu que lorsque la poignée 3 est engagée dans le logement 104 et lorsque la minuterie 9 est réglée.

L'appareil de cuisson suivant l'invention présente l'avantage de pouvoir être utilisé manuellement ou avec la minuterie selon le choix de l'utilisateur.

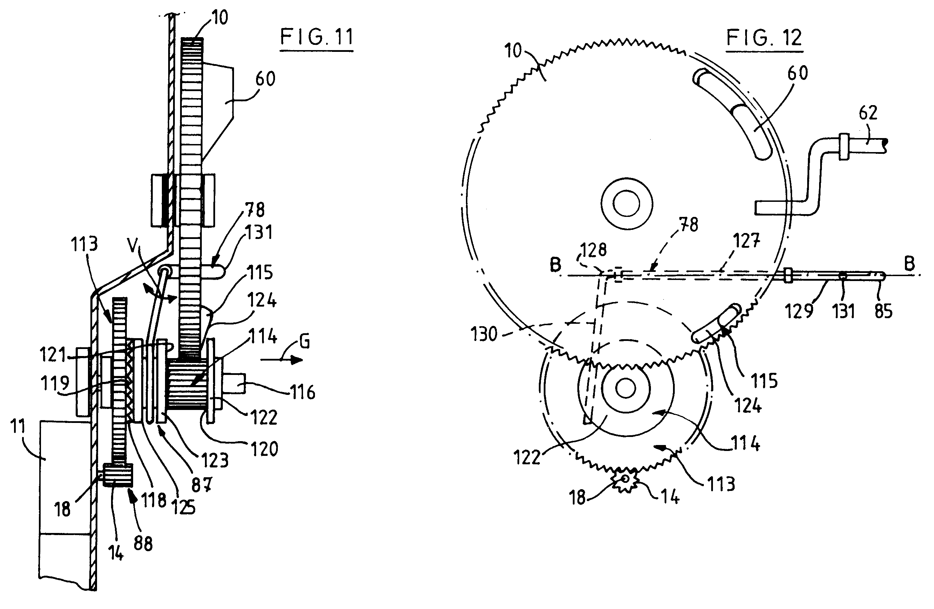

Les figures 11 et 12 sont des vues similaires aux figures 3 et 2 d'une partie d'un appareil de cuisson suivant l'invention. Cet appareil comprend une minuterie 9 constituée d'un disque 10 entraîné en rotation par un moteur 11. Le disque 10 porte une came 60 agissant sur un organe 62 provoquant le déplacement d'un coulisseau, à une extrémité duquel est suspendu un panier. Le déplacement du coulisseau permet de lever ledit panier dans la cuve de l'appareil de cuisson, ce déplacement ayant lieu après un intervalle de temps déterminé par la minuterie 9.

Le moteur 11 est monté dans un circuit 88 qui comprend un système 87 permettant l'arrêt de la rotation du disque 10 lorsque le panier est dans sa position levée.

Le système 87 qui permet l'arrêt de la rotation du disque 10 comporte :

un premier élément 113 entraîné en rotation par la roue dentée 14 montée sur l'arbre 18 du moteur 11 et

un deuxième élément 114 destiné à mettre en rotation le disque 10.

Lorsque les éléments 113,114 sont associés l'un avec l'autre, la rotation du disque 10 est possible.

L'association des éléments 113,114 l'un avec l'autre est commandée par une pièce intermédiaire 115. Cette pièce intermédiaire 115 est avantageusement une came située sur la face du disque 10 portant la came 60.

Lorsque la came 60 agit sur l'organe 62 et amène le panier en position levée, la came 115 agit sur l'élément 114 de manière à séparer celui-ci de l'élément 113. Ainsi, le disque ne sera plus mis en rotation, en dépit du fait que l'élément 113 soit toujours entraîné par le moteur 11.

Les éléments 113,114 sont constitués de deux roues dentées montées sur un même arbre 116, au moins une (114) desdites roues pouvant coulisser le long dudit arbre 116. La roue dentée 113 présente une face 117 pouvant être associée à une face 118 de la roue 114.

De préférence, les faces 117,118 sont munies d'une série de dents 119, les dents de la face 117 de la roue 113 épousant la forme des dents de la face 118.

La roue 114 est munie, au voisinage de ses extrémités 120,121, d'une collerette 122,123. Ces collerettes 122,123 permettent d'assurer un contact permanent entre la roue 114 et un bord périphérique du disque 10.

Lorsque la came 115 située sur le disque 10 vient en contact avec la collerette 122 située au voisinage de l'extrémité 120 de la roue 114, cette dernière subit un déplacement dans le sens de la flèche G, le long de l'arbre 116. Ainsi, les dents 119 de la roue 114 ne sont plus engagées dans les dents de la roue 113, de sorte que la roue 114 n'est plus mise en rotation par la roue 113 entraînée par le moteur 11. De cette façon, le disque n'est plus en rotation, en dépit du fait que le moteur continue à entraîner la roue 113.

Dans une forme de réalisation avantageuse, la collerette 123 située au voisinage de l'extrémité 121 de la roue 114 présente une gorge 125 dans laquelle une extrémité 126 d'un organe 63 est engagée. Cet organe 63 est destiné à éloigner la poignée 3 de la position dans laquelle elle s'étend le long de la cuve.

Cet organe 63 comprend une tige coudée 78 pouvant pivoter (flèche V, axe B-B) par rapport à la cuve 1. Cette tige coudée 78 est constituée d'une barre formée d'un tronçon 127 coaxial à l'axe B-B muni à chacune de ses extrémités 128,129 d'une branche 130,131. La branche 130 est partiellement engagée dans la gorge 125 de la collerette 123, tandis que la branche 131 est destinée à agir sur la poignée 3 de manière à l'éloigner. Les branches 130,131 sont sensiblement perpendiculaires à l'axe de pivotement B-B. La branche 131 porte un bras 85 destiné à agir sur la poignée 3.

Dans cette forme de réalisation, la came 115 présente de préférence une rampe 124, celle-ci s'élevant progressivement du disque 10.

Le moteur 11 entraîne de façon continue la roue 113, de sorte que celle-ci peut entraîner une roue (non montrée) destinée à mesurer le temps d'utilisation de l'appareil de cuisson. Cette roue peut porter des indications destinées, par exemple, à avertir l'utilisateur qu'il doit remplacer la matière grasse contenue dans la cuve 1 de l'appareil. Une telle indication est importante, puisqu'il est bien connu que toutes matières grasses ou huiles, utilisées dans des appareils de cuisson tels que des friteuses, ont un temps de vie déterminé. Lorsque ce temps de vie est dépassé, la matière grasse ou huile devient impropre à la consommation.

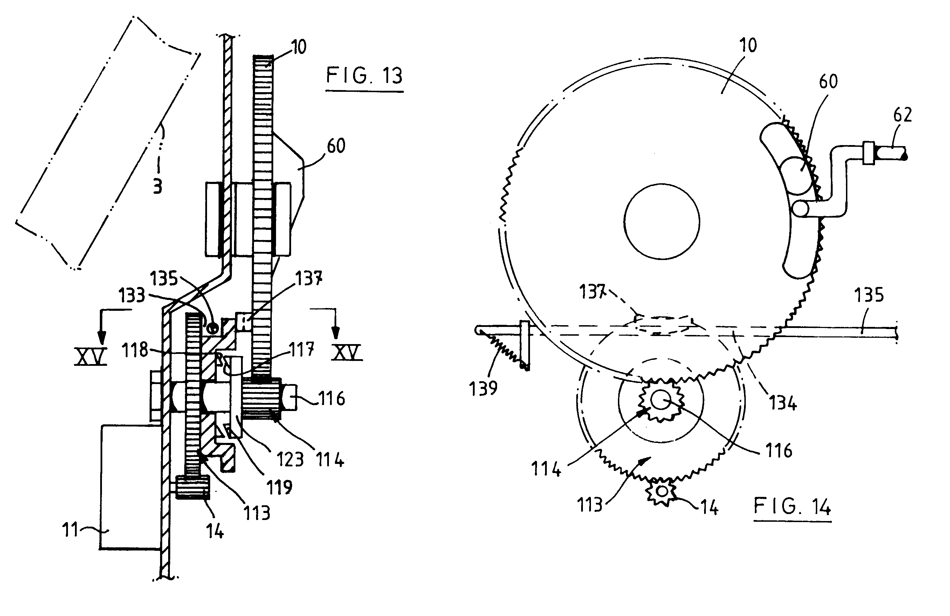

Les figures 13 à 16 sont des vues d'une autre forme de réalisation d'un appareil de cuisson suivant l'invention.

Cette forme de réalisation se distingue de celle montrée aux figures 11 et 12 par le fait que la roue 113 peut coulisser le long de l'arbre 116, tandis que la roue 114 est fixée sur cet arbre 116.

Ces roues 113,114 présentent sur une de leurs faces latérales 117,118 des dents 119. Lorsque les dents 119 de la face 117 de la roue 114 épousent la forme des dents de la face 118 de la roue 113, le moteur 11 entraîne la rotation du disque 10.

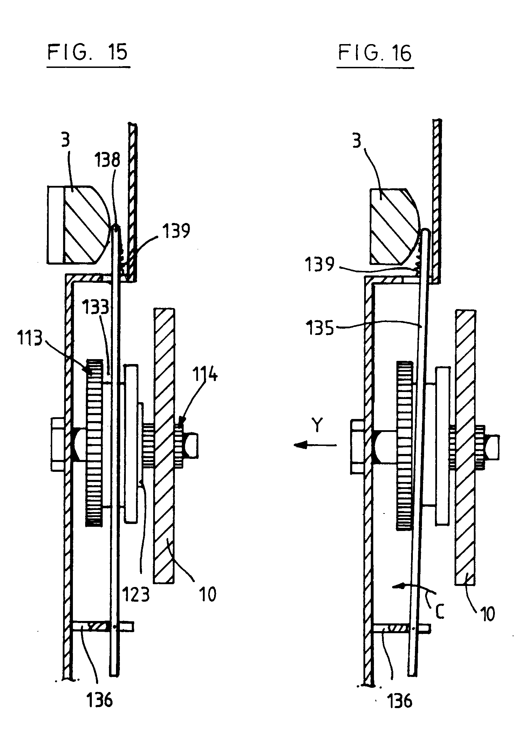

La roue 114 présente à une de ses extrémités une collerette 123, tandis que la roue 113 présente une gorge 133 dans laquelle est engagée une extrémité 134 d'une barre 135 agissant sur la poignée 3 de manière à l'éloigner de sa position dans laquelle elle s'étend le long de la cuve. Cette barre 135 est articulée à une paroi 136 de l'appareil, de sorte que le déplacement de la roue 113 dans le sens de la flèche Y provoque le pivotement de ladite barre 135 par rapport à son articulation, ce pivotement (flèche C) provoquant l'éloignement de la poignée 3 de la cuve (voir figures 15 et 16, la figure 15 étant une vue suivant la ligne XV-XV de l'appareil montré à la figure 13).

La roue 113 peut être éloignée de la roue 114 grâce à une came 137 située sur le disque 10. Cette came 137, lorsqu'elle prend appui sur la roue 113, provoque le coulissement de celle-ci (flèche Y) le long de l'arbre 116. L'éloignement de la roue 113 par rapport à la roue 114 permet d'arrêter la mise en rotation de la roue 114 et donc du disque 10.

La roue 113 qui est encore entraînée par le moteur 11 engrène une roue destinée à mesurer le temps d'utilisation de l'appareil ou le temps d'utilisation de la matière grasse ou de l'huile placée dans la cuve de l'appareil (non montrée).

La barre 135 est reliée à une (138) de ses extrémités à un ressort 139 fixé à la paroi 136 de l'appareil. Ce ressort 139 permet de maintenir la barre 135 soit dans une position où elle éloigne la roue 113 de la roue 114, soit dans une position où elle maintient en contact la roue 113 et la roue 114.

Cette barre 135 est avantageusement munie d'un marteau destiné à frapper une cloche lorsque le panier est en position relevée.

## Revendications

1. Appareil de cuisson électrique comprenant une cuve (1), un panier ajouré (2) pouvant être levé ou abaissé dans cette cuve (1), une poignée (3) reliée au panier (2) par un système de connexion (4) comportant, d'une part, un coulisseau (5) à mouvement de va-et-vient et, d'autre part, un dispositif (6) par lequel le panier (2) est suspendu à une extrémité du coulisseau (5), ainsi qu'un mécanisme (7) à moteur (11) provoquant un déplacement du coulisseau (5) de manière à lever ou abaisser le panier (2) dans la cuve, caractérisé en ce qu'il comprend une minuterie (9) constituée d'un disque (10) entraîné en rotation par le moteur (11) et une tige coudée (64) pouvant pivoter par rapport à la cuve (1), cette tige présentant au moins deux branches sensiblement perpendiculaires à l'axe de pivotement (A-A) de la tige (64), la première branche étant dirigée vers le disque (10) tandis que la seconde branche (69) est dirigée vers le coulisseau (5), de sorte que lorsque la première branche entre en contact avec une came (60) que porte le disque (10), elle provoque le pivotement de la tige (64) et de la deuxième branche (69) de manière à déplacer le coulisseau (5) pour lever le panier après un intervalle de temps déterminé par la minuterie (9), cet appareil comprenant un système (87) arrêtant la rotation dudit disque (10) lorsque le panier (2) est dans sa position levée.

2. Appareil de cuisson électrique suivant la revendication 1, caractérisé en ce que le coulisseau (5) présente une butée (48) sur laquelle la deuxième branche (69) de la tige coudée (64) prend appui pour le déplacement dudit coulisseau (5).

3. Appareil de cuisson électrique suivant l'une quelconque des revendications 1 ou 2, caractérisé en ce que la tige coudée (64) est constituée d'une barre formée de deux tronçons (65,66) coaxiaux à son axe de pivotement (A-A), cette barre présentant entre ces deux tronçons coaxiaux (65,66) un tronçon éloigné (67) de l'axe de pivotement (A-A) et, à l'extrémité (68) d'un (66) de ces deux tronçons coaxiaux (65,66), une branche (69) sensiblement perpendiculaire à l'axe de pivotement (A-A) de la barre.

4. Appareil de cuisson électrique suivant l'une quelconque des revendications précédentes, caractérisé en ce qu'il est muni d'un élément de rappel (75) agissant sur la tige coudée (64), de manière à libérer le coulisseau (5) et permettre ainsi au panier (2) d'être abaissé dans la cuve (1).

5. Appareil de cuisson électrique suivant l'une quelconque des revendications precédentes caractérisé en ce que le système (87) arrêtant la rotation dudit disque (10) est un interrupteur monté dans un circuit électrique commandant le moteur (11).

6. Appareil de cuisson électrique suivant l'une quelconque des revendications 1 à 4 caractérisé en ce que le système (87) arrêtant la rotation dudit disque (10) comporte un premier élément (113) mis en rotation par le moteur (11) et un second élément (114) destiné à mettre en rotation le disque (10), lesdits éléments étant associés l'un avec l'autre pour mettre en rotation ledit disque (10), cette association étant commandée par une pièce intermédiaire (115).

7. Appareil de cuisson électrique suivant la revendication 6, caractérisé en ce que lesdits éléments (113,114) sont des roues dentées montées sur un même arbre (116), au moins une desdites roues pouvant coulisser le long dudit arbre, une desdites roues présentant au moins une face (117) pouvant être associée à une autre face (118) de l'autre roue.

8. Appareil de cuisson électrique suivant la revendication 7, caractérisé en ce que la pièce intermédiaire commandant l'association est une came (115,137) située sur le disque (10).

9. Appareil de cuisson électrique suivant l'une quelconque des revendications précédentes, dans lequel la poignée (3) est articulée au coulisseau (5), de manière à pouvoir pivoter depuis une première position dans laquelle elle s'étend le long de la cuve (1) jusqu'à une seconde position où elle est sensiblement perpendiculaire à la cuve (1), caractérisé en ce que le disque (10) précité porte une autre came (61) agissant sur un organe (63) éloignant la poignée (3) de ladite première position.

10. Appareil de cuisson électrique suivant les revendications 1 et 9, caractérisé en ce que les cames (60,61) sont montées sur des faces opposées du disque (10).

11. Appareil de cuisson électrique suivant les revendications 5 et 9, caractérisé en ce que, dans sa première position, la poignée (3) agit sur l'interrupteur (87) de manière à maintenir le circuit (88) fermé.

12. Appareil de cuisson électrique suivant les revendications 6 et 9, caractérisé en ce que, dans sa première position, la poignée (3) agit sur la pièce intermédiaire (115) de manière à associer les premier et deuxième éléments (113,114), le disque (10) portant une came (115,137) destinée à déplacer la pièce intermédiaire de manière à éloigner la poignée (3) de ladite première position.

13. Appareil de cuisson électrique suivant l'une quelconque des revendications précédentes, caractérisé en ce que le moteur (11) précité entraîne le disque (10) par l'intermédiaire d'un engrenage (12).

14. Appareil de cuisson électrique suivant la revendication 13, caractérisé en ce que l'engrenage (12) engrène avec une couronne dentée (21) solidaire du disque précité (10).

15. Appareil de cuisson électrique suivant la revendication 13 caractérisé en ce que la couronne dentée (21) est coaxiale au disque (10) et porte une série circulaire de saillies (22) engagées de manière amovible dans des évidements (23) ménagés dans le disque (10) précité, de manière à solidariser la couronne (21) du disque (10).

16. Appareil de cuisson électrique suivant la revendication 15, caractérisé en ce que la minuterie (9) comporte un bouton de réglage (29) permettant de faire tourner pas à pas le disque (10) par rapport à la couronne (21) à l'encontre de l'action d'un ressort (26).

17. Appareil de cuisson électrique suivant la revendication 9, caractérisé en ce que l'organe (63) éloignant la poignée (3) de ladite première position est constitué d'une tige coudée (78) pouvant pivoter par rapport à la cuve (1), cette tige coudée (78) présentant deux branches (82,84) sensiblement perpendiculaires à l'axe de pivotement (B-B) de la tige (78), la première branche (82) étant dirigée vers le disque (10), tandis que la seconde branche (84) est dirigée vers la cuve (1) et porte à son extrémité, au voisinage de la cuve (1), un bras (85) sensiblement parallèle à l'axe de pivotement (B-B), de sorte que, lorsque la première branche (82) entre en contact avec l'autre came (61) du disque (10), elle provoque le pivotement de la tige (78), de la deuxième branche (84) et du bras (85), de manière à éloigner la poignée (3) de ladite première position.

18. Appareil de cuisson électrique suivant la revendication 17, caractérisé en ce que la tige coudée (78) est constituée d'une barre formée de deux tronçons coaxiaux (79,80), cette barre étant constituée d'un tronçon (81) éloigné de l'axe de pivotement (B-B) entre ces deux tronçons coaxiaux (79,80), d'une branche (82) sensiblement perpendiculaire à l'axe de pivotement (B-B) de la barre à une extrémité (83) d'un (79) des tronçons coaxiaux (79,80) et d'une branche (84) munie d'un bras (85) à l'extrémité de l'autre tronçon (84).

19. Appareil de cuisson électrique suivant l'une quelconque des revendications 17 et 18, caractérisé en ce qu'il est muni d'un élément de rappel (86) agissant sur la tige coudée (78).

20. Appareil de cuisson électrique suivant l'une quelconque des revendications 17 à 19, caractérisé en ce que la poignée (3) présente, sur sa face (55) adjacente à la cuve (1), dans ladite première position, une protubérance (93) sur laquelle prend appui le bras (85) pour éloigner la poignée (3) de ladite première position.

21. Appareil de cuisson électrique suivant la revendication 20, caractérisé en ce que les cames (60,61) sont disposées sur le disque (10) de sorte que, lorsqu'une came (60) a agi sur l'organe (62) provoquant le déplacement du coulisseau (5) de manière à lever le panier (2), l'autre came (61) agit sur l'organe (63) éloignant la poignée (3) de ladite première position, de manière à arrêter la rotation du disque (10).

22. Appareil de cuisson électrique suivant la revendication 8, caractérisé en ce que la came (115,137) agit sur une des roues dentées (113,114) de manière à les éloigner l'une de l'autre.

23. Appareil de cuisson électrique suivant la revendication 22, caractérisé en ce qu'une des roues (113,114) présente une gorge (125,133) dans laquelle est engagée une partie d'un organe (63), cet organe étant destiné à éloigner la poignée (3) de la position dans laquelle elle s'étend le long de la cuve, lorsque le panier est en position levée.

24. Appareil de cuisson électrique suivant la revendication 23, caractérisé en ce que l'organe (63) est une tige coudée constituée d'une barre formée d'un tronçon (127) coaxial à l'axe de pivotement (B-B) dudit organe, cette barre est munie à chacune de ses extrémités d'une branche (130,131), une première branche (130) étant partiellement engagée dans la gorge (125) d'une roue (113) tandis que la deuxième branche (131) porte un bras (85) destiné à agir sur la poignée (3), de sorte que, lorsque la came (115) provoque le déplacement de la roue (113), les branches (130,131) et le bras (85) subissent un pivotement de manière à éloigner la poignée (3) de la position dans laquelle elle s'étend le long de la cuve.

25. Appareil de cuisson électrique suivant la revendication 23, caractérisé en ce que l'organe (63) est une barre articulée à une paroi (136) de la cuve.

26. Appareil de cuisson électrique suivant la revendication 25, caractérisé en ce que la barre est munie d'un marteau destiné à frapper une cloche lorsque les roues (113,114) sont éloignées les unes des autres.

27. Appareil de cuisson électrique suivant l'une quelconque des revendications 7, 8 et 22 à 26, caractérisé en ce que la roue (113) entraînée par le moteur (11) entraîne une roue destinée à indiquer le temps d'utilisation de l'appareil.

28. Appareil de cuisson électrique suivant l'une quelconque des revendications précédentes, caractérisé en ce que la ou les cames (60,61) présentent une rampe (90) s'élevant progressivement du disque (10) jusqu'à un plateau (91) et ensuite une rampe (92) s'abaissant progressivement vers le disque (10).

29. Appareil de cuisson électrique suivant la revendication 5, caractérisé en ce que l'interrupteur (87) arrêtant le moteur (11) lorsque le panier (2) est dans la position levée comprend un organe de commande constitué d'une lame (110) dont une extrémité est solidaire dudit interrupteur et dont l'autre extrémité est munie d'un marteau (111) destiné à venir frapper une cloche lorsque le panier (2) est dans sa position relevée.

**Claims**

1. Electrical cooking appliance comprising a vessel (1), an open work basket (2) which can be raised or lowered into this vessel (1), a handle (3) linked to the basket (2) by a connecting system (4) comprising, on the one hand, a sliding means (5) with backward and forward motion and, on the other hand, a device (6) by means of which the basket (2) is hung by one end of the sliding means (5), as well as a system (7) with a motor (11) causing a displacement of the sliding means (5) so as to raise or lower the basket (2) into the vessel, characterized in that it comprises a timer (9) constituted of a disk (10) moved into rotation by the motor (11) and a bent rod (64) able to pivote with respect to a vessel (1), this rod having at least two legs substantially perpendicular to the axis of pivotment (A-A) of the rod (64), the first leg being directed towards the disk (10), while the other leg (69) is directed towards the sliding means (5), so that, when the first leg contacts a cam (60) beared by the disk (10), it causes the pivotment of the rod (64) and of the second leg (69) so as to move the sliding means (5) for raising the basket after a period of time determined by the timer (9), this appliance comprising a system (87) stopping the rotation of said disk (10) when the basket (2) is in its raised position.

2. Electrical cooking appliance according to claim 1, characterized in that the sliding means (5) has a thrust bearing (48) on which the second leg (69) of the bent rod (64) takes contact for the displacement of the said sliding means (5).

3. Electrical cooking appliance according to anyone of the claims 1 or 2, characterized in that the bent rod (64) is constituted of a rod having two parts (65, 66) which are co-axial with its axis of pivotment (A-A) and, at the end (68) of one (66) of these two co-axial parts (65, 66), a leg (69) substantially perpendicular to the axis of pivotment (A-A) of the rod.

4. Electrical cooking appliance according to anyone of the preceding claims, characterized in that it is provided with a restoring element (75) acting on the bent rod (64) so as to liberate the sliding means (5) and to allow the basket (2) to be lowered into the vessel (1).

5. Electrical cooking appliance according to anyone of the preceding claims, characterized in that the system (87) stopping the rotation of said disk (10) is a switch mounted in an electrical circuit operating the motor (11).

6. Electrical cooking appliance according to anyone of the claims 1 to 4, characterized in that the system (87) stopping the rotation of said disk (10) comprises a first element (113) rotated by the motor (11) and a second element (114) intended to rotate the disk (10), the said elements being linked each together so as to rotate said disk (10), this link being operated by an intermediate piece (115).

7. Electrical cooking appliance according to claim 6, characterized in that said elements (113,114) are toothed wheels mounted on a same rod (116), at least one of said wheels being able to slide along the said rod, one of said wheels having at least one side (117) being able to be linked to another side (118) of the other wheel.

8. Electrical cooking appliance according to claim 7, characterized in that the intermediate piece operating the link is a cam (115, 137) located on the disk (10).

9. Electrical cooking appliance according to anyone of the preceding claims, in which the handle (3) is hinged to the sliding means (5) so as to be able to pivote from a first position in which it stretches along the vessel (1) in a second position in which it is substantially perpendicular to the vessel (1), characterized in that the herefore mentioned disk (10) bears another cam (61) acting on an organ (63) for moving the handle (3) away from the said first position.

10. Electrical cooking appliance according to claims 1 and 9, characterized in that the cams (60,61) are mounted on opposite sides of disk (10).

11. Electrical cooking appliance according to claims 5 and 9, characterized in that, in its first position, the handle (3) acts on the switch (87) so as to maintain closed the circuit (88).

12. Electrical cooking appliance according to claims 6 and 9, characterized in that the handle (3) in its first position acts on the intermediate piece (115) so as to link the first and second elements (113, 114), the disk (10) bearing a cam (115, 137) intended to move the intermediate piece so as to move the handle (3) away from the said first position.

13. Electrical cooking appliance according to anyone of the preceding claims, characterized in that the above mentioned motor (11) drives the disk (10) by means of a gear (12).

14. Electrical cooking appliance according to claim 13, characterized in that the gear (12) works with a toothed ring (21) secured on the above mentioned disk (10).

15. Electrical cooking appliance according to claim 13, characterized in that the toothed ring (21) is co-axial with the disk (10) and bears a circular succession of protuberances (22) engaged, on a movable way, into recesses (23) of the above mentioned disk (10) so as to link the ring (21) with the disk (10).

16. Electrical cooking appliance according to claim 15, characterized in that the timer (9) comprises a regulating button (29) allowing the rotation of the disk (10) step by step with respect to the ring (21) against the action of a spring (26).

17. Electrical cooking appliance according to claim 9, characterized in that the organ (63) moving the handle (3) away from the first position is constituted of a bent rod (78) able to pivote with respect to the vessel (1), this bent rod (78) having two legs (82, 84) substantially perpendicular to the axis of pivotment (B-B) of the rod (78), the first leg (82) being directed towards the disk (10), while the second leg (84), directed towards the vessel (1), bears at its ends in the neighbourhood of the vessel (1) an arm (85) substantially parallel to the axis of pivotment (B-B), so that, when the first leg (82) contacts the other cam (61) of the disk (10), the rod (78), the second leg (84) and the arm (85) pivote so as to move the handle (3) away from said first position.

18. Electrical cooking appliance according to claim 17, characterized in that the bent rod (78) is constituted of a rod having two co-axial parts (79, 80), this rod being constituted of a part (81) distant from the axis of pivotment (B-B) and located between these two co-axial parts (79,80), a leg (82) substantially perpendicular to the axis of pivotment (B-B) of the rod at an end (83) of one (79) of the co-axial parts (79,80) and a leg (84) provided with an arm (85) at the end of the other part (84).

19. Electrical cooking appliance according to anyone of the claims 17 and 18, characterized in that it is provided with a restoring means (86) acting on the bent rod (78).

20. Electrical cooking appliance according to anyone of the claims 17 to 19, characterized in that the handle (3) has, on its side (55) adjacent to the vessel (1) in its first position, a protuberance (93) on which the arm (85) acts so as to move the handle (3) away from the said first position.

21. Electrical cooking appliance according to claim 20, characterized in that the cams (60, 61) are located on the disk (10) so that, when a cam (60) acts on the organ (62) for displacing the sliding means (5) so as to raise the basket (2), the other cam (61) acting on the organ (63) moves the handle (3) away from the said first position, so as to stop the rotation of the disk (10).

22. Electrical cooking appliance according to claim 8, characterized in that the cam (115, 137) acts on one of the toothed wheels (113, 114) so as to move them away the one from the other.

23. Electrical cooking appliance according to claim 22, characterized in that one of the wheels (113, 114) has a groove (125, 133) in which is inserted a part of an organ (63), this organ being intended to move the handle (3) away from the position in which it stretches along the vessel, when the basket is raised.

24. Electrical cooking appliance according to claim 23, characterized in that the organ (63) is a bent rod constituted of a rod having a part (127) which is co-axial to the axis of pivotment (B-B) of said organ, this rod is provided at each of its ends with a leg (130, 131), a first leg (130) being partly inserted into a groove (125) of a wheel (113) while the second leg (131) bears an arm (85) intended to act on the handle (3) so that, when the cam (115) operates the displacement of the wheel (113), the legs (130, 131) and the arm (85) pivote so as to move the handle (3) away from the position in which it stretches along the vessel.

25. Electrical cooking appliance according to claim 23, characterized in that the organ (63) is a rod hinged to a wall (136) of the vessel.

26. Electrical cooking appliance according to claim 25, characterized in that the rod is provided with a knocker intended to hit a bell when the wheels (113, 114) are separated from each other.

27. Electrical cooking appliance according to anyone of the claims 7, 8 and 22 to 26, characterized in that the wheel (113) driven by the motor (11) drives a wheel intended to show the time of use of the appliance.

28. Electrical cooking appliance according to anyone of the preceding claims, characterized in that the cam or cams (60, 61) have a slope (90) raising progressively from the disk (10) up to a plate (91) and then a slope (92) lowering progressively towards the disk (10).

29. Electrical cooking appliance according to claim 5, characterized in that the switch (87) stopping the motor (4) when the basket (2) is in the raised position comprises an operating organ constituted of a plate (110), one end of which is secured on the switch and the other end of which is provided with a hammer (111) intended to hit a bell when the basket (2) is in its raised position.

**Patentansprüche**

1. Elektrisches Kochgerät mit einem Topf (1), einem durchbrochenen Korb (2), der in diesem Topf (1) angehoben und abgesenkt werden kann, einem Handgriff (3), der mit dem Korb (2) durch ein Verbindungssystem (4) verbunden ist, das einerseits ein hin- und herbewegbares Gleitstück (5) und andererseits eine Vorrichtung (6) aufweist, durch die der Korb (2) an einem Ende des Gleitstücks (5) aufgehängt ist, sowie einem mit einem Motor (11) versehenen Mechanismus (7), der eine Verschiebung des Gleitstücks (5) bewirkt, um den Korb (2) im Topf anzuheben oder abzusenken, dadurch gekennzeichnet, daß es eine Schaltuhr (9) aufweist, die aus einer von dem Motor (11) drehbaren Scheibe (10) und einer bezüglich des Topfes (1) schwenkbaren gekröpften Stange (64) besteht, wobei diese Stange mindestens zwei Zweige aufweist, die in wesentlichen schwenkbar zur Schwenkachse (A-A) dar Stange (64) sind, wobei der erste Zweig zur Scheibe (10) hingerichtet ist, während der zweite Zweig (69) zu dem Gleitstück (5) hingerichtet ist, derart, daß der erste Zweig, wenn er mit einen von der Scheibe (10) getragenen Nocken (60) in Berührung tritt, die Schenkbewegung der Stange (64) und des zweiten Zweiges (69) beiwirkt, so daß das Gleitstück (5) verschoben wird, um den Korb nach einem von der Schaltuhr (9) bestimmten Zeitintervall anzuheben, wobei dieses Gerät ein System (87) aufweist, das die Drehbewegung der Scheibe (10) anhält, wenn sich der Korb (2) in seiner angehobenen Stellung befindet.

2. Elektrischen Kochgerät nich Anspruch 1, dadurch gekennzeichnet, daß das Gleitstück (5) einen Anschlag (48) aufweist, an den sich dar zweite Zweig (69) der gekröpften Stange (64) für die Verschiebung des Gleitstücks (5) anlegt.

3. Elektrisches Kochgerät nach einem der Ansprüche 1 oder 2, dadurch gekennzeichnet, daß die gekröpfte Stange (64) von einem Stab gebildet wird, der mit zwei zu seiner Schwenkachse (A-A) koaxialen Abschnitten (65, 66) versehen ist, wobei dieser Stab zwischen den beiden koaxialen Abschnitten (65, 66) einen zur Schwenkachse (A-A) beabstandeten Abschnitt sowie an dem Ende (68) eines (66) der beiden koaxialen Abschnitte (65, 66) einen Zweig (69) aufweist, der im wesentlichen senkrecht zur Schwenkachse (A-A) des Stabes verläuft.

4. Elektrisches Kochgerät nach einem der vorhergehenden Ansprüche, dadurch gekennzeichnet, daß es mit einem Rückholelement (75) versehen ist, das auf die gekröpfte Stange (64) so einwirkt, daß das Gleitstück (5) freigesetzt wird und somit der Korb (2) in den Topf (1) abgesenkt werden kann.

5. Elektrisches Kochgerät nach einem der vorhergehenden Ansprüche, dadurch gekennzeichnet, daß das System (87), das die Drehbewegung der Scheibe (10) anhält, ein Schalter ist, der in einem den Motor (11) steuernden elektrischen Kreis angebracht ist.

6. Elektrisches Kochgerät nach einem der Ansprüche 1 bin 4, dadurch gekennzeichnet, daß das System (87), das die Drehbewegung der Scheibe (10) anhält, ein von dem Motor (11) gedrehtes erstes Element (113) und ein zweites Element (114) aufweist, das dazu dient, die Scheibe (10) in Drehung zu versetzen, wobei diese Elemente einander zugeordnet sind, um die Scheibe (10) in Drehung zu versetzen, wobei diese Zuordnung durch ein Zwischenstück (115) gesteuert wird.

7. Elektrisches Kochgerät nach Ansprüch 6, dadurch gekennzeichnet, daß diese Elemente (113, 114) Zahnräder sind, die auf der gleichen Welle (116) angebracht sind, wobei mindestens eines der Zahnräder auf der Welle gleiten kann, wobei eines der Räder mindestens eine Seitenfläche (117) aufweist, die eine andere Seitenfläche (118) des anderen Zahnrades zugeordnet werden kann.

8. Elektrisches Kochgerät nach Anspruch 7, dadurch gekennzeichnet, daß das Zwischenstück zur Steuerung der Zuordnung ein Nocken (115, 137) ist, der auf der Scheibe (10) angeordnet ist.

9. Elektrisches Kochgerät nach einem der vorhergehenden Ansprüche, dadurch gekennzeichnet, daß der Handgriff (3) am Gleitstück (5) so angelenkt ist, daß er aus einer ersten Stellung, in der er sich längs des Topfes (1) erstreckt, bis in eine zweite Stellung, in der er im wesentlichen senkrecht zum Topf (1) vorläuft, schwenkbar ist, dadurch gekennzeichnet, daß die besagte Scheibe (10) einen weiteren Nokken (61) trägt, der auf ein Bauteil (63) einwirkt, das den Handgriff (3) aus der ersten Stellung heraus bewegt.

10. Elektrisches Kochgerät nach den Ansprüchen 1 und 9, dadurch gekennzeichnet, daß die Nocken (60, 61) auf gegenüberliegenden Seitenflächen der Scheibe (10) angebracht sind.

11. Elektrischen Kochgerät nach den Ansprüchen 5 und 9, dadurch gekennzeichnet, daß dar Handgriff (3) in seiner ersten Stellung auf den Schalter (87) so einwirkt, daß der Kreis (88) geschlossen bleibt.

12. Elektrisches Kochgerät nach den Ansprüchen 6 und 9, dadurch gekennzeichnet, daß der Handgriff (3) in seiner ersten Stellung auf das Zwischenstück (115) so einwirkt, daß das erste und zweite Element (113, 114) einander zugeordnet werden, wobei die Scheibe (10) einen Nocken (115, 137) trägt, der dazu dient, das Zwischenstück zu verschieben, um den Handgriff (3) aus der ersten Stellung heraus zubewegen.

13. Elektrisches Kochgerät nach einem der vorhergehenden Ansprüche, dadurch gekennzeichnet, daß der besagte Motor (11) die Scheibe (10) über ein Zahnradgetriebe (12) antreibt.

14. Elektrisches Kochgerät nach Ansprüche 13, dadurch gekennzeichnet, daß das Zahnradgetriebe (12) mit einem Zahnkranz (21) kämmt, der mit der besagten Scheibe (10) fest verbunden ist.

15. Elektrisches Kochgerät nach Anspruch 13, dadurch gekennzeichnet, daß der Zahnkranz (21) koaxial zu der Scheibe (10) ist und eine kreisförmige Reihe von Vorsprüngen (22) trägt, die lösbar in Ausnehmungen (23) der besagten Scheibe (10) greifen, um den Zahnkranz (21) mit der Scheibe (10) fest zu verbinden.

16. Elektrisches Kochgerät nach Anspruch 15, dadurch gekennzeichnet, daß die Schaltuhr (9) einen Regelknopf (29) aufweist, durch den die Scheibe (10) bezüglich des Zahnkranzes (21) entgegen der Wirkung einer Feder (26) schrittweise gedreht werden kann.

17. Elektrisches Kochgerät nach Anspruch 9, dadurch gekennzeichnet, daß das Bauteil (63), das den Handgriff (3) aus der ersten Stellung herausbewegt, von einer gekröpften Stange (78) gebildet wird, die bezüglich des Topfes (1) schwenkbar ist, wobei diese gekröpfte Stange (78) zwei Zweige (82, 84) aufweist, die im wesentlichen senkrecht zu der Schwenkachse (B-B) der Stange (78) sind, wobei der erste Zweig (82) in Richtung auf die Scheibe (10) gerichtet ist, während der zweite Zweig (84) in Richtung auf den Topf (1) gerichtet ist und an seinem dem Topf (1) benachbarten Ende einen Arm (85) trägt, der im wesentlichen parallel zur Schwenkachse (B-B) ist, derart, daß der erste Zweig (82), wenn er mit dem weiteren Nocken (61) der Scheibe (10) in Berührung tritt, die Schwenkbewegung der Stange (78), des zweiten Zweiges (84) und des Arms (85) hervorruft, so daß der Handgriff (3) aus seiner ersten Stellung heraus bewegt wird.

18. Elektrisches Kochgerät nach Anspruch 17, dadurch gekennzeichnet, daß die gekröpfte Stange (78) von einem Stab gebildet wird, der mit zwei koaxialen Abschnitten (79, 80) versehen ist, wobei dieser Stab aus einem zur Schwenkachse (B-B) beabstandeten Abschnitt (81) zwischen den beiden koaxialen Abschnitten (79, 80), einem zur Schwenkachse (B-B) des Stabes im wesentlichen senkrechten Zweig (82) an einem Ende (83) eines (79) der koaxialen Abschnitte (79, 80) und einem Zweig (84) besteht, der mit einem Arm (85) an den Ende des anderen Abschnittes (84) versehen ist.

19. Elektrischen Kochgerät nach einem der Ansprüche 17 und 18, dadurch gekennzeichnet, daß es mit einem Rückholelement (86) versehen ist, das auf die gekröpfte Stange (78) einwirkt.

20. Elektrisches Kochgerät nach einem der Ansprüche 17 bis 19, dadurch gekennzeichnet, daß der Handgriff (3) auf seiner dem Topf (1) benachbarten Seitenfläche (55) in der ersten Stellung einen Vorsprung (93) aufweist, an den sich der Arm (85) anlehnt, um den Handgriff (3) aus der ersten Stellung heraus zu bewegen.

**21.** Elektrisches Kochgerät nach Anspruch 20, dadurch gekennzeichnet, daß die Nocken (60, 61) auf der Scheibe (10) so angeordnet sind, daß, wenn ein Nocken (60) auf das Bauteil (62) eingewirkt hat, um das Gleitstück (5) zu verschieben und somit den Korb (2) anzuheben, der andere Nocken (61) auf das Bauteil (63) einwirkt, das den Handgriff (3) aus der ersten Stellung heraus bewegt, so daß die Drehung der Scheibe (10) unterbrochen wird.

**22.** Elektrisches Kochgerät nach Anspruch 8, dadurch gekennzeichnet, daß der Nocken (115, 137) auf eines der Zahnräder (113, 114) so einwirkt, daß sie voneinander entfernt werden.

**23.** Elektrisches Kochgerät nach Anspruch 22, dadurch gekennzeichnet, daß eines der Zahnräder (113, 114) eine Nut (125, 133) aufweist, in die ein Abschnitt eines Bauteiles (63) eingreift, wobei dieses Bauteil dazu dient, den Handgriff (3) aus der Stellung heraus zu bewegen, in der er entlang des Topfes verläuft, während sich der Korb angehobenen Stellung befindet.

**24.** Elektrisches Kochgerät nach Anspruch 23, dadurch gekennzeichnet, daß das Bauteil (63) eine gekröpfte Stange in Form eines Stabes ist, der mit einem zur Schwenkachse (B-B) dieses Bauteiles koaxialen Abschnitt (127) versehen ist, wobei dieser Stab an jedem seiner Enden mit einem Zweig (130, 131) versehen ist, wobei ein erster Zweig (130) teilweise in die Nut (125) eines Zahnrades (113) greift, während der zweite Zweig (131) einen Arm (85) trägt, der auf den Handgriff (3) derart eingreift, daß, wenn der Nocken (115) die Verschiebung des Zahnrades (113) bewirkt, die Zweige (130, 131) und der Arm (85) eine Schwenkbewegung ausführen, so daß der Handgriff (3) aus der Stellung, in der er entlang des Topfes verläuft, heraus bewegt wird.

**25.** Elektrisches Kochgerät nach Anspruch 23, dadurch gekennzeichnet, daß das Bauteil (63) ein Stab ist, der an einer Wand (136) des Topfes angelenkt ist.

**26.** Elektrisches Kochgerät nach Anspruch 25, dadurch gekennzeichnet, daß der Stab mit einem Hammer versehen ist, der an eine Glocke schlägt, wenn die Zahnräder (113, 114) voneinander entfernt sind.

**27.** Elektrisches Kochgerät nach einem der Ansprüche 7, 8 und 22 bis 26, dadurch gekennzeichnet, daß das vom Motor (11) angetriebene Zahnrad (113) ein Rad antreibt, das zum Anzeigen der Gebrauchsdauer des Gerätes dient.

**28.** Elektrisches Kochgerät nach einem der vorhergehenden Ansprüche, dadurch gekennzeichnet, daß der oder die Nocken (60, 61) eine Rampe (90), die von der Scheibe fortschreitend bis zu einem Plateau (91) ansteigt, und anschließend eine Rampe (92), die zur Scheibe (10) hin fortschreitend abfällt, aufweist.

**29.** Elektrisches Kochgerät nach Anspruch 5, dadurch gekennzeichnet, das der Schalter (87), dem den Motor (11) anhält, wenn, sich der Korb (2) in der angehobenen Stellung befindet, ein Steuerglied aufweist, das von einem Federblatt (110) gebildet wird, dessen eines Ende mit dem Schalter fest verbunden ist und dessen anderes Ende mit einem Hammer (111) versehen ist, der gegen eine Glocke schlägt, wenn der Korb (2) seine angehobene Stellung einnimmt.

FIG. 1

FIG. 3

FIG. 2

FIG. 4

FIG. 5

FIG. 6

EP 0 309 435 B1

FIG. 7

18

FIG. 8

FIG. 9

FIG. 10

FIG. 11

FIG. 12

EP 0 309 435 B1

FIG. 13

FIG. 14

FIG. 15

FIG. 16